# EUROPEAN PATENT SPECIFICATION

(11) **EP 3 924 653 B1**
(45) Date of publication and mention of the grant of the patent: **02.04.2025**
(21) Application number: 20702854.9
(22) Date of filing: 10.02.2020
(51) Int. Cl.: F16K 15/04, D01F 2/00, F16K 1/42, F16K 25/00

(54) **USE OF A CHECK VALVE FOR BLOCKING BACK FLOW OF FLUID COMPRISING CELLULOSE, APPARATUS AND FOR PROCESSING CELLULOSE PULP**
VERWENDUNG EINES RÜCKSCHLAGVENTILS ZUR SPERRUNG DES RÜCKFLUSSES EINER ZELLULOSEHALTIGEN FLÜSSIGKEIT, VORRICHTUNG UND VERARBEITUNG VON ZELLULOSEPULPE
UTILISATION D'UN CLAPET ANTI-RETOUR POUR BLOQUER LE REFLUX D'UN FLUIDE COMPRENANT DE LA CELLULOSE, APPAREIL ET POUR LE TRAITEMENT DE LA PULPE DE CELLULOSE

(30) Priority: 11.02.2019 EP 19156347
(43) Date of publication of application: 22.12.2021
(73) Proprietor: Borregaard AS, 1721 Sarpsborg (NO)
(72) Inventor: SOLEVÅG, Thomas, 1701 Sarpsborg (NO); FJELD, Øivind, 1701 Sarpsborg (NO); JOSEFEN, Stein, 1701 Sarpsborg (NO)
(74) Representative: Tostmann, Holger Carl
(86) International application number: PCT/EP2020/053322
(87) International publication number: WO 2020/165089

(56) References cited:
- EP-A1- 1 500 855
- EP-A1- 1 701 032
- DE-A1- 19 509 776
- DE-A1- 3 504 673
- DE-U1- 202016 101 105
- US-A- 1 270 961
- US-A- 3 113 587
- US-A- 4 228 821
- US-A1- 2003 056 484
- US-A1- 2011 142 703

## Description

The present invention relates to the use of a check valve for blocking back-flow of fluid. The present invention further relates to an apparatus for processing cellulose pulp, said apparatus comprising at least one check valve. The present invention further relates to a method for processing cellulose pulp, wherein cellulose pulp periodically flows through at least one check valve.

Microfibrillated cellulose ("MFC", also known as *"reticulated"* cellulose or as *"superfine"* cellulose, or as *"cellulose nanofibrils",* among others) is described, for example, in WO 2007/091942 A1.

MFC may be manufactured by processing, in particular compressing and subsequently expanding through one or more orifices. Therein, cellulose pulp may be periodically delivered or pumped through a check valve blocking back-flow against a conveying direction, respectively.

In accordance with the present invention, the check valve is for blocking back flow of fluid though a passage, wherein said fluid comprises cellulose, wherein said fluid preferablyis pressurized with a peak pressure of at least 500 bar while the check valve is closed.

US 2011/0142703 A1 refers to a variable displacement vane pump including a relief valve which includes a valve bore, a spherical valve element in the valve bore, a valve seat fixed onto one axial side of the valve bore and having a through hole and an annular seat surface on which the valve element is seated when the relief valve is in a closed position, a coil spring disposed on the other axial side of the valve bore, and a valve element retainer disposed between the valve element and the coil spring, wherein the seat surface is configured such that when the relief valve is in the closed position, a center of the valve element is located offset from a central axis of one winding seating portion of the coil spring which is disposed on an opposite side of the seat surface, in a radial direction of the valve bore.

EP 1 701 032 A1 refers to a check valve for a fuel pump, including: a seat face formed on a fuel passage; a valve member that includes a ball made of ceramics and is adapted to approach and leave the seat face; and a spring for biasing the ball toward the seat face, wherein the fuel passage is closed when the ball is seated on the seat face, and the fuel passage is opened when the ball is brought apart from the seat face by a pressure generated against the biasing force of the spring, wherein the ball seating portion of the seat face is formed into a curved face having a larger curvature than that of the ball, so that the ball and the seat face come into a band-shaped contact at the seating time.

US 1 270 961A refers to a valve in which the combination of a T shaped union or casing provided with a central passage and vertical transverse passsages communicating therewith in the central and vertical transverse arms of said casing, said arms being provided with valve chambers and each valve chamber having in the lower part thereof a circular sharp edge valve seat and each chamber having in the upper part thereof a plurality of circumferentially spaced checking and alining devices and a globular metallic valve vertically reciprocal in each chamber and adapted to cooperate with said valve seats and said alining ribs for the purpose designated. This valve can be used as check valve in any piping system, especially for pumping semi-fluid and fibrous substances such as wood or paper pulp. The aim is to avoid clogging of the valve by the material in the pump.

EP 1 500 855 A1 refers to a pressure control valve has a non-uniformly tapered valve bore that has an increasing diameter as it extends downstream, wherein an interface angle defined in part between a valve ball and the valve bore in the area of the smallest gap between them, increases as the valve ball is increasingly displaced away from a valve seat of the valve bore.

It is an object of the present invention to improve an apparatus for processing cellulose pulp comprising at least one check valve, to improve a method for processing cellulose pulp wherein cellulose pulp periodically flows through at least one check valve, or to improve, preferably intermittently, blocking back-flow of fluid respectively.

According to one aspect of the present invention, one object outlined above is solved by use(age) of a check valve according to claim 1. Claims 6, 11 refer to an apparatus for processing cellulose pulp comprising at least one check valve as described herein, and a method for processing cellulose pulp wherein cellulose pulp periodically flows through at least one check valve as described herein, respectively. As already emphasized, such use of the check valve establishes particular advantageous applications of the present invention.

According to one aspect of the present invention, a check valve comprises a housing which partially or fully contains a valve seat and a valve member, which according to one embodiment of the present invention are inserted into said housing.

According to one embodiment of the present invention, the valve seat is or has been inserted after the valve member, i.e. the valve member is or has been inserted first and the valve seat is or has been then placed onto the inserted valve member respectively. This sequence improves assembly and/or stability of the check valve.

The housing may be a one-part housing - which in particular may improve fluid tightness - or a multiple-part housing - which in particular may simplify manufacturing and/or assembly.

Additionally or alternatively, said valve seat is axis-symmetrical and/or manufactured (in) one-piece according to one embodiment of the present invention, which, in particular, may improve fluid tightness and/or weight and/or simplify manufacturing and/or assembly.

Additionally or alternatively, said valve member is axis-symmetrical and/or manufactured (in) one-piece according to one embodiment of the present invention which in particular may improve fluid tightness and/or weight and/or simplify manufacturing and/or assembly.

According to one aspect of the present invention, the valve member comprises a, preferably continuous, contact surface which is convex(ly) curved and is denoted as member contact surface herein. According to one embodiment of the present invention said member contact surface is an at least essentially spherical surface, preferably a spherical surface.

Said member contact surface may, in particular, improve sealing performance of the check valve.

According to one aspect of the present invention, the valve seat comprises a (fluid) passage through which fluid flows, preferably periodically, in a conveying direction or which is adapted thereto or used therefor respectively. Said passage may be a single-line or multi-line passage and/or (defined by) an inner bore.

According to one aspect of the present invention, the valve seat comprises a, preferably continuous, (counter-)contact surface which is denoted as seat contact surface herein. Said seat contact surface is axis-symmetrical according to one embodiment of the present invention, preferably axis-symmetrical to a longitudinal and/or symmetry axis of the inner bore and/or vale seat. Such a seat contact surface preferably improves sealing performance of the check valve.

According to one aspect of the present invention, the valve member or its member contact surface respectively is pretensioned against the valve seat or its seat contact surface respectively and seals said passage when or by contacting it, or is adapted thereto or used therefor respectively.

The valve member can be moved or is moveable against said pretension or increasing said pretension respectively, thereby opening said passage for fluid flow, preferably self-acting or autonomously respectively due to a (fluid) pressure difference upstream versus downstream of the check valve or is adapted thereto or used therefor respectively.

By selecting or varying the pretension, accordingly, an opening pressure (difference) at which the check valve opens self-actingly may be set advantageously according to one embodiment of the present invention. According to a preferred embodiment, such opening pressure (difference) is at least 1 bar, preferably at least 2 bar, more preferably at least 3 bar, and/or at most 10 bar, preferably at most 8 bar, more preferably at most 6 bar, the pretension being selected accordingly.

According to one aspect of the present invention, said passage has a minimal flow-through area or minimal opening or orifice respectively of at least 40 mm², preferably of at least 50 mm², and/or preferably has a minimal inner diameter of at least 7.5 mm, preferably a minimal inner diameter of at least of at least 8 mm.

According to one embodiment of the present invention, the minimal flow-through area of the passage or seat valve respectively is at most 1020 mm², preferably at most 700 mm², further preferably at most 550 mm², more preferably at most 320 mm², even more preferably at most 90 mm², and/or the passage has a minimal inner diameter of at most 36 mm, preferably a minimal inner diameter of at most 29 mm, further preferably a minimal inner diameter of at most 26 mm, more preferably a minimal inner diameter of at most 20 mm, even more preferably a minimal inner diameter of at most 10 mm. The present invention performs particularly advantageously within such range or at such relatively large minimal flow-through areas respectively.

According to one aspect of the present invention, the seat contact surface has a concave curvature wherein a, preferably minimal, maximal, average and/or constant, curvature radius of said concave curvature is larger than a, preferably minimal, maximal, average and/or constant, curvature radius of the convex member contact surface.

According to one embodiment of the present invention, such concave curvature with such a larger curvature radius is believed to significantly improve the sealing performance and/or durability of the check valve, in particular when used with fluids which are high(er) pressurized and/or comprise solids. Without wishing to be bound by theory, it is assumed that such geometry provides a particularly advantageous elastic deformation and therefore stress distribution within valve seat and valve member.

According to one embodiment of the present invention, said curvature radius of the seat contact surface is at least 105%, preferably at least 110%, of said curvature radius of the member contact surface and at most 125%, preferably at most 120%, of said curvature radius of the member contact surface.

Selecting the ratio between said two curvature radii of the seat and member contact surface respectively has surprisingly been found to advantageously (further) improve the sealing performance and/or durability of the check valve.

According to one embodiment of the present invention, the seat contact surface comprises, preferably is, a radius, preferably a machined and/or constant radius, which is at least 105%, preferably at least 110%, of a/the (constant) radius of the spherical member contact surface, and at most 125%, preferably at most 120%, of the (constant) radius of the spherical member contact surface.

Thus, if in a preferred embodiment, the spherical member contact surface has a radius of 13 mm, preferably the valve member being a ball with a diameter of 26 mm, then the seat contact surface may preferably comprise or be a radius of at least 13.65 mm (= 1.05·13 mm), preferably at least 14.3 mm (= 1.1·13 mm), and at most 16.25 mm (= 1.25·13 mm), preferably at most 15.6 mm (= 1.2·13 mm), most preferably between 14.8 mm and 15.2 mm. If the member contact surface's radius or ball diameter is chosen differently, the radius of the seat contact surface is preferably scaled accordingly.

Selecting the ratio between said (machined and/or constant) radius of the seat contact surface and the (constant) radius of the (spherical) member contact surface, respectively, has surprisingly been found to advantageously (further) improve the sealing performance and/or durability of the check valve.

According to one embodiment of the present invention, an axial length of said (machined and/or constant) radius, measured preferably along a longitudinal axis of the valve seat, preferably a symmetry axis of the valve seat or seat contact surface respectively, is at least 7,5%, preferably at least 10%, of said radius and at most 20%, preferably at most 17,5%, of said radius.

Thus, if for example the seat contact surface comprises, preferably is, a radius of 15 mm, then said radius may preferably extend axially at least 1.125 mm (= 0.075·15 mm), preferably at least 1.5 mm (= 0.1·15 mm), and at most 3 mm (= 0.2·15 mm), preferably at most 2.625 mm (= 0.175·15 mm), most preferably between 1.5 mm and 2.5 mm. If the radius is chosen differently, the axial length may preferably be scaled accordingly.

Selecting said ratio between said (machined and/or constant) radius of the seat contact surface and is axial length has surprisingly been found to advantageously (further) improve the sealing performance and/or durability of the check valve.

According to one embodiment of the present invention, said radius of the seat contact surface, preferably its center or reference point respectively, is laterally offset (away) from a/the longitudinal axis of the valve seat, preferably a/the symmetry axis of the valve seat or seat contact surface respectively.

According to one embodiment of the present invention, said lateral offset points away from the radius so that, in a preferred embodiment, in a cross-section comprising the longitudinal axis of the valve seat a (lateral) distance between two opposing radii of the seat contact surface becomes smaller.

Additionally or alternatively said lateral offset is at least 5%, preferably at least 7.5%, and at most 15%, preferably at most 12.5%, of said radius of the seat contact surface according to one embodiment of the present invention.

Thus, if in a preferred embodiment the seat contact surface has or is a radius of 15 mm then said radius may preferably be lateral offset by at least 0.75 mm (= 0.05·15 mm), preferably at least 1.125 mm (= 0.075·15 mm), and at most 2.25 mm (= 0.15·15 mm), preferably at most 1.875 mm (= 0.125·15 mm), most preferably between 1.3 mm and 1.7 mm. If the radius is chosen differently, the lateral offset may preferably be scaled accordingly.

Surprisingly, it has been found that a concave curvature seat contact surface which is fully or partially defined or established respectively by a (machined and/or constant) radius which is laterally offset, preferably with a ratio between lateral offset and radius as given above, may significantly (further) improve the sealing performance and/or durability of the check valve.

According to one embodiment of the present invention, the (machined and/or constant) radius of the seat contact surface, preferably its center or reference point respectively, is axially outwards offset (away) from a, preferably seat-sided, front face of the valve seat along its longitudinal axis. If not denoted otherwise, the terms "axial(ly)" and "radially" herein are used with respect to the longitudinal axis, preferably symmetric axis, of the check valve or valve seat or seat contact surface respectively.

Thus, "axially" refers to a direction parallel to the longitudinal axis, "radially" to a direction perpendicular to the longitudinal axis and intersecting the longitudinal axis.

Said axial offset is at least 25%, preferably at least 40%, and at most 75%, preferably at most 65%, of said radius of the seat contact surface according to one embodiment of the present invention.

Thus, if in a preferred embodiment the seat contact surface has a radius of 15 mm, then said radius may preferably be axially offset by at least 3.75 mm (= 0.25·15 mm), preferably at least 6 mm (= 0.4·15 mm), and at most 11.25 mm (= 0.75·15 mm), preferably at most 9.75 mm (= 0.65·15 mm), most preferably between 7.5 mm and 9.5 mm. If the radius is chosen differently, the axial offset may preferably be scaled accordingly.

Surprisingly, it has been found that a ratio between axial offset and radius as given above may significantly (further) improve the sealing performance and/or durability of the check valve.

According to one embodiment of the present invention, a transition between the seat contact surface, preferably the/its (machined and/or constant) radius, and a, preferably valve member-sided, front face of the valve seat and/or a transition between the seat contact surface, preferably the/its (machined and/or constant) radius, and an/the inner bore of the passage (each) comprises, preferably is, a (transition) radius, preferably a machined and/or constant radius, respectively which preferably is at most 20%, preferably at most 15%, of the radius of the seat contact surface.

Thus, if in a preferred embodiment, the seat contact surface has a radius of 15 mm then said transition radius/radii may preferably (each) be at most 3 mm (= 0.2·15 mm), preferably at most 2.25 mm (= 0.15.15 mm). If the seat contact surface's radius is chosen differently, the transition radius/radii may preferably be scaled accordingly.

By such transition radii the fluid dynamics may be improved advantageously according to one embodiment.

As already pointed out, the valve member preferably may comprise, preferably be, a ball. Thus the check valve may preferably be a so-called ball design check valve according to one embodiment of the present invention.

In accordance with the present invention, the valve member is guided linearly within the housing, preferably by a poppet, according to one embodiment of the present invention.

Said ball and poppet may be independent parts - which may in particular improve manufacturing and/or sealing and/or guiding performance - or be connected or formed integrally with one another respectively (so-called integrated poppet and ball design check valve) which in particular may improve assembly and/or weight.

According to one embodiment of the present invention, the poppet may have an angular cross-section, preferably a hexagonal cross-section, which may (further) improve guidance. Additionally or alternatively, the poppet may comprise a lateral outer surface which contacts or slides along respectively a corresponding guiding surface of the housing so as to guide the valve member or poppet respectively linearly within the housing according to one embodiment of the present invention, which may (further) improve guidance. Additionally or alternatively, the poppet may comprise one or more inner channel(s) transferring fluid from the valve seat passage if the check valve (is) open(s) or the inner channel(s) being adapted thereto respectively according to one embodiment of the present invention which may (further) improve guidance.

Additionally or alternatively, the valve member may be pretensioned by one or more springs, preferably coil spring(s), according to one embodiment of the present invention. Such valve members can, preferably by combining two or more of said features, (further) improve the sealing performance and/or durability of the check valve.

According to one embodiment of the present invention, the housing is made from, preferably, but not limited to, stainless steel in various grades and conditions. The stainless steel may, or may not, be heat treated, coated, sintered and/or untreated.

The valve seat is made from ceramic or steel, preferably stainless steel, according to one embodiment of the present invention. The stainless steel may be heat treated, coated, sintered and/or untreated.

Additionally or alternatively, the valve member is sintered and/or made from diamond, ruby or ceramic or steel according to one embodiment of the present invention. According to one embodiment of the present invention, the valve member is made from steel, preferably stainless steel in various grades and conditions. The stainless steel may be heat treated, coated, sintered and/or untreated.

Additionally, or alternatively, the poppet and/or (coil) spring(s) can be made from, but not limited to, preferably, stainless steel in various grades and conditions. The stainless steel may, or may not, be heat treated, coated, sintered and/or untreated.

According to one embodiment of the present invention, the seat contact surface is surface hardened and/or coated.

Such material selection or treatment, respectively, can, preferably in combination, (further) improve the sealing performance and/or durability of the check valve.

According to one embodiment of the present invention, the valve seat inserted into a cavity within the housing comprises a collar, said collar preferably being an axial(ly protruding) collar and/or comprising the seat contact surface and/or being inserted, preferably form-fittingly, into a corresponding inner bore of the housing. According to one embodiment of the present invention, said collar, in particular its (ending) ledge, may define an axial position of the valve seat within the housing, in particular by abutment. Additionally or alternatively, the collar may fix a radial position of the valve seat within the housing, in particular by form-fit, according to one embodiment of the present invention.

An axial length of said collar, measured preferably along a/the longitudinal axis of the valve seat, is at least 50%, preferably at least 65%, and at most 100%, preferably at most 85%, of said curvature radius of the member contact surface according to one embodiment of the present invention.

Thus, if in a preferred embodiment the spherical member contact surface has a radius of 13 mm, preferably the valve member being a ball with a diameter of 26 mm, then such axial collar length may preferably be at least 6.5 mm (= 0.5·13 mm), preferably at least 8.45 mm (= 0.65·13 mm), and at most 13 mm (= 1.13 mm), preferably at most 11.05 mm (= 0.85·13 mm), most preferably between 9 mm and 10 mm. If the member contact surface's radius is chosen differently, the axial collar length may preferably be scaled accordingly.

Selecting the axial collar length accordingly may particularly advantageously distribute stress from the seat contact surface into the valve seat or its collar respectively.

The collar may be a radially inner collar and/or protrude (axially) towards the valve member according to one embodiment of the present invention. Thus, the valve seat may comprise a base and the collar protruding (axially) from an axial surface of said base towards the valve member so that said axial surface establishes an ending ledge of the collar, wherein base and collar are manufactured (in) one-piece and/or base and/or collar have a circular cross-section and/or the collar has a smaller, in particular maximal, (outer) circumferential length then the base and/or said, preferably radially outer, axial surface of the base or ending ledge of the collar respectively abuts, preferably axially, against the housing and/or limits an axial displacement of the valve seat within the housing towards the valve member according to one embodiment of the present invention. According to one embodiment of the present invention, the valve seat has a stepped outer lateral surface which preferably may be defined at least in part by the (preferably wider) base and the (preferably smaller, radially inner) collar.

Such (axial) collar, in particular support of the radially inner collar by form-fit with the housing, in particular its inner bore, and/or limiting an axial displacement of the valve seat within the housing towards the valve member by the collar's ending ledge, may advantageously improve assembly of the check valve and/or stress distribution within the valve seat and/or sealing performance between valve member and valve seat.

Additionally or alternatively, the valve seat inserted into a/the cavity within the housing is held in place by a gland defining, in particular comprising, an inlet opening, in particular port, of the check valve according to one embodiment of the present invention. According to one embodiment of the present invention said gland is made from steel, preferably stainless steel. The stainless steel may be heat treated, coated, sintered and/or untreated.

According to one embodiment of the present invention housing and gland are different elements and/or gland and valve member are located at (axially) opposite sides of the valve seat.

This can advantageously improve assembly and/or reduce the weight and/or size of the check valve according to one embodiment.

According to one embodiment of the present invention, the gland extends (axially) into the housing. Additionally or alternatively, the gland presses the valve seat against the housing, preferably in the direction towards the valve member, according to one embodiment of the present invention. Additionally or alternatively, the gland comprises a, preferably external, thread engaging with a, preferably internal, thread of the housing according to one embodiment of the present invention.

Such gland may particularly advantageously (further) improve assembly of the check valve and/or sealing between valve seat and housing, preferably allowing to adjust pretension between valve seat and housing and thus sealing between them.

According to one embodiment of the present invention, the curvature radius of the member contact surface is at least 10 mm and at most 20 mm. Thus, if the valve member comprises, preferably is, a ball, said ball may have a diameter of at least 20 mm and at most 40 mm.

Additionally or alternatively, a diameter of the valve member ball is at least 140% and at most 180% of a minimal diameter of the passage, wherein said diameter of the passage may in particular be a minimal hydraulic diameter of the passage. A minimal hydraulic diameter d_{h,min} is defined as usual by the quotient of the fourfold minimal flow-through area Aₘᵢₙ of the passage divided by its circumference U: d_{h,min} = (4·Aₘᵢₙ)/U. Thus, if the minimal flow-through area of the passage has a circular shape, said hydraulic diameter corresponds to the diameter of said circle (d_{h,min} = (4·Aₘᵢₙ)/U = [4·(d/2)²·π]/(d·π) = d). The minimal flow-through area of the passage is preferably (defined as) the smallest or minimal free cross-sectional area of the passage through which fluid (can) flow(s). Thus, according to a preferred embodiment, a fluid flow through the passage is limited or defined by said minimal flow-through area times (mean) fluid velocity times density of the fluid respectively.

So, if the passage is defined by an inner bore having a minimal circular cross-section with a diameter of 16 mm and the valve member comprises, preferably is, a ball, then a diameter of said ball preferably is at least 22.4 mm (= 14·16 mm) and at most 28.8 mm (= 1.8·16 mm), most preferably between 24 mm and 28 mm. If the passage's diameter is chosen differently, the ball diameter may preferably be scaled accordingly. Thus, if the passage's diameter is 20 mm, the ball diameter may preferably be at least 28 mm (= 1.4·20 mm) and at most 36 mm (= 1.8·20 mm), most preferably between 30 mm and 34 mm.

Such sizing has been found to provide advantageous sealing performance and/or durability of the check valve.

According to one aspect of the present invention, the check valve as described herein is used for automized blocking return-flow or back-flow respectively of fluid through the passage, wherein said fluid comprises solids, preferably cellulose, and/or is pressurized with a maximal pressure of at least 500 bar, preferably at least 1000 bar, further preferably at least 1500 bar, more preferably at least 2,000 bar, even more preferably at least 2500 bar, most preferably at least 3,000 bar, while the check valve is closed or blocks back-flow of said pressurized fluid respectively and/or flows through the open passage with a maximal flow rate of at least 50 I/min, preferably at least 80 I/min, further preferably at least 100 I/min, more preferably at least 120 I/min. According to one embodiment of the present invention the maximal pressure may be limited by 7,000 bar, preferably 6,000 bar, more preferably 5,000 bar. The maximal flow rate may be limited by 300 I/min, preferably 250 I/min, further preferably 200 l/min according to one embodiment of the present invention. So, according to one embodiment of the present invention, the check valve is used or adapted respectively to seal automized against return or back-flow of fluid comprising solids, in particular cellulose, and being pressurized with a maximal pressure of at least 500 bar, preferably at least 1000 bar, further preferably at least 1500 bar, more preferably at least 2,000 bar, even more preferably at least 2500 bar, most preferably at least 3,000 bar, respectively.

The check vale is particularly suitable for such (ultra) high-pressure/flow rate and/or solid/cellulose-comprising fluid applications.

Therefore, according to one aspect of the present invention, an apparatus for processing cellulose pulp comprises at least one pulp feed line with one or more check valves as described herein. Additionally or alternatively, according to one aspect of the present invention in a method for processing cellulose pulp, cellulose pulp periodically flows through the passage of one or more check valves as described herein in a conveying direction, said self-acting check valve(s) blocking back-flow through the passage against said conveying direction, in particular during, preferably cyclic, compression of the pulp downstream of the check valve.

In accordance with the present invention, the valve member is guided linearly within the housing

The invention is described in more detail in the following, with reference to the enclosed figures, which are only meant to be illustrative, wherein:
- **Figure 1**: shows a perspective view of a check valve according to one embodiment of the present invention;
- **Figure 2**: shows a sectional view of the check valve comprising a longitudinal axis of a valve seat;
- **Figure 3**: shows an enlarged sectional view of the valve seat; and
- **Figure 4**: shows part of an apparatus for processing cellulose pulp according to one embodiment of the present invention.

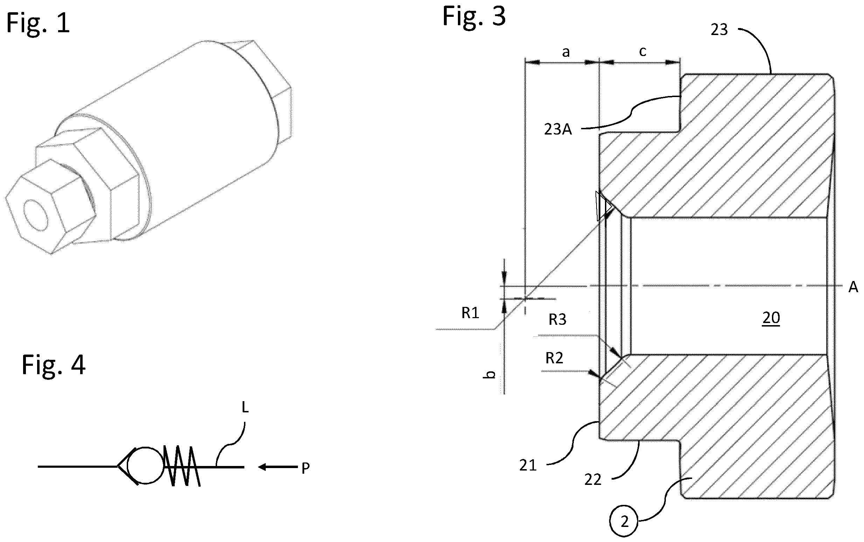

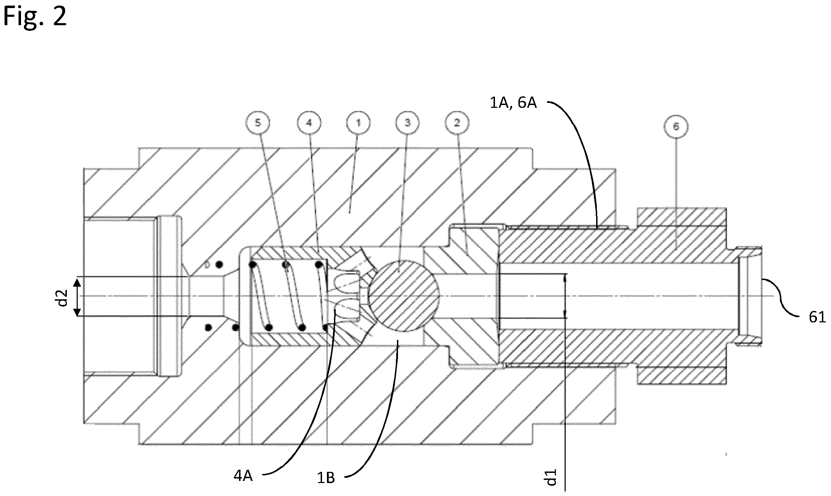

Figures 1, 2 show a perspective or sectional view of a check valve respectively according to one embodiment of the present invention.

Said check valve comprises a housing (1) which contains an axis-symmetric valve seat (2) and a ball (3) (valve member).

Said valve member or ball (3), respectively, comprises a spherical and thus convex member contact surface and is guided linearly within the housing by a poppet (4).

Said valve seat (2) inserted into a cavity within the housing comprises a collar (22) and is held in place by a gland (6) defining an inlet port (61) of the check valve. The valve seat comprises an inner bore (passage) (20) (see Figure 3) and a seat contact surface which will be described in further detail with respect to Figure 3.

The ball (3) and thus its member contact surface is pretensioned by a coil spring (5) via poppet (4) against said valve seat (2) and thus its seat contact surface and seals said passage when sitting on the valve seat (2) or seat contact surface respectively.

According to embodiments of the present invention, the gland (6), the coil spring (5) and/or the poppet (4) is made from steel, preferably stainless steel. The stainless steel may be heat treated, coated, sintered and/or untreated.

If fluid pressure difference between the inlet port and an outlet opening of housing (1) exceeds a predetermined threshold, self-acting check valve, in particular its passage (20), opens by ball (3) being pushed against said pretension (i.e. to the left in Figure 2), thereby (further) compressing coil spring (5). As soon as fluid pressure difference drops sufficiently, self-acting check valve, in particular its passage, closes by ball (3) being pushed against valve seat, in particular its seat contact surface (i.e. to the right in Figure 2).

The circular inner bore or passage (20) respectively has a (hydraulic) diameter d1 of 16 mm, i.e. a minimal flow-through area of approximately 200 mm² ((16 mm/2)²·π).

The housing (1) comprises an inner bore with a slightly smaller minimal diameter d2 which opens into an outlet opening of the check valve respectively.

As depicted in Figure 3, the seat contact surface is (defined by) a radius R1 of 15 mm. Accordingly, the ball (3) may have a diameter of 26 mm according to one embodiment so that the seat contact surface radius R1 = 15 mm is approximately 115% of the spherical valve member contact surface radius of 26 mm/2 = 13 mm, i.e. more than 110% and less than 120% of R1. According to one embodiment the seat contact surface is axis-symmetric with respect to axis A.

Said radius R1 or its center point respectively is axially outwards offset away from a front face (21) of the valve seat along its longitudinal axis A (to the left in Figure 3) by an axial offset a of approximately 8.5 mm and laterally offset from the longitudinal axis A by a lateral offset b, wherein said lateral offset b points away from the seat contact surface (downwards in Fig. 3) and is approximately 1.5 mm. c denotes an axial length of collar (22).

Said laterally and axially offset radius R1 transits into the front face (21) by a transition radius R2 of approximately 2 mm and into the inner bore of the passage (20) by a transition radius R3 of approximately 1.5 mm.

As shown in Figs. 2, 3, the valve seat (2) comprises a base (23) and the radially inner collar (22) protruding axially (horizontally in Figs. 2, 3) from an axial surface (23A) of said base towards the valve member (3) (to the left in Figs. 2, 3) so that the valve seat has a stepped outer lateral surface and said axial surface (23A) establishes an ending ledge of the collar, wherein base (23) and collar (22) are manufactured (in) one-piece, the collar (22) having a smaller maximal outer circumferential length then the base (23) and the axial surface (23A) of the base (23), i.e. ending ledge of the collar (22), abuts against the housing (1) and thus limits an axial displacement of the valve seat (22) within the housing (1) towards the valve member (2) (to the left in Figs. 2, 3).

The gland (6) extends into the housing (1) and comprises an external thread (6A) engaging with an internal thread (1A) of the housing (1).

For assembly, spring (5), poppet (4) and ball (3) may be inserted into the cavity (1B) of the housing (1) first, followed by valve seat (2) and gland (6) screwed into the housing('s thread) (1(A)).

The poppet (4) comprises one or more inner channels (4A) for fluid from the valve seat passage 20 (if the check valve (is) open(s)).

Figure 4 shows part of an apparatus for processing cellulose pulp according to one embodiment of the present invention, wherein the check valve of Figure 1 is positioned at a pulp feed line L for delivering cellulose pulp P.

According to one embodiment of the present invention, cellulose pulp P is periodically delivered through the check valve and compressed downstream thereof (left in Figure 4), in particular to manufacture microfibrillated cellulose, wherein the check valve provides automized non-return functionality so as to realize continuous cyclic operation by blocking the feed line L during compression.

## Claims

1. Use of a check valve for blocking back flow of fluid (P) through a passage (20), wherein said fluid comprises cellulose, said fluid preferably being pressurized with a maximal pressure of at least 500 bar while the check valve is closed and/or said fluid preferably flowing through the open passage with a maximal flow rate of at least 50 I/min;
wherein said check valve comprises
- a housing (1) which contains:
- a valve seat (2) comprising the passage (20) and a seat contact surface (R1), wherein said valve seat is made from steel or a ceramic material; and
- a valve member (3) comprising a convexly curved, preferably essentially spherical, member contact surface;
said member contact surface being pretensioned against said seat contact surface for sealing said passage;
said valve member being movable increasing said pretension for opening said passage;
wherein
- said passage has a minimal flow-through area of at least 40 mm²; and
- said seat contact surface has a concave curvature wherein a curvature radius of said concave curvature is larger than a curvature radius of the member contact surface, and
- said valve member is guided linearly within the housing.

2. The use of a check valve according to claim 1, **characterized in that** said curvature radius of the seat contact surface is at least 105% of the curvature radius of the member contact surface and at most 125% of the curvature radius of the member contact surface.

3. The use of a check valve according to claim 2, **characterized in that** the seat contact surface comprises a radius (R1) which is at least 105% of a radius of the spherical member contact surface and at most 125% of the radius of the spherical member contact surface.

4. The use of a check valve according to claim 3, **characterized in that**
- said radius of the seat contact surface is axially outwards offset from a front face (21) of the valve seat along its longitudinal axis (A), preferably by at least 25% and at most 75% of said radius of the seat contact surface; and/or **in that**
- an axial length of said radius of the seat contact surface is at least 7,5% and at most 20% of said radius of the seat contact surface; and/or **in that**
- said radius of the seat contact surface is laterally offset from a longitudinal axis (A) of the valve seat;
- wherein said lateral offset preferably
- points away from the seat contact surface and/or
- is at least 5% and at most 15% of said radius of the seat contact surface.

5. The use of a check valve according to one of the preceding claims, **characterized in that**
- a transition between the seat contact surface and a front face (21) of the valve seat and/or
- a transition between the seat contact surface and an inner bore of the passage (20)
- comprise(s) a radius (R2; R3) which preferably is at most 20% of the radius of the seat contact surface; and/or **in that**
- the valve member comprises a ball (3), wherein preferably a diameter of the ball is at least 140% and at most 180% of a minimal diameter of the passage; and/or **in that**
- the valve member is guided linearly within the housing, preferably by a poppet (4) which preferably comprises at least one inner channel (4A) for fluid from the valve seat passage (20); and/or **in that**
- the valve member is pretensioned by at least one spring, preferably coil spring (5); and/or **in that**
- the housing and/or valve seat are/is made from steel or ceramic; and/or **in that**
- the valve member is sintered and/or made from diamond, ruby, ceramic or steel; and/or **in that**
- the seat contact surface is surface-hardened and/or coated; and/or **in that**
- the valve seat inserted into a cavity within the housing has a stepped outer lateral surface; and/or **in that**
- the curvature radius of the member contact surface is at least 10 mm and at most 20 mm; and/or **in that**
- the valve seat inserted into a cavity within the housing comprises a collar (22), the collar preferably being a radially inner collar and/or protruding towards the valve member; and/or **in that**
- the valve seat inserted into a cavity within the housing is held in place by a gland (6) defining an inlet opening (61) of the check valve, wherein preferably
- said gland extends into the housing and/or presses the valve seat against the housing, preferably in the direction towards the valve member, and/or comprises a, preferably external, thread (6A) engaging with a, preferably internal, thread (1A) of the housing; and/or
- the gland and valve member are located at opposite sides of the valve seat.

6. An apparatus for processing cellulose pulp (P), comprising a pulp feed line (L) with at least one check valve for blocking back flow of fluid through a passage (20), said fluid comprising cellulose, said fluid preferably being pressurized with a peak pressure of at least 500 bar while the check valve is closed and/or said fluid preferably flowing through the open passage with a maximal flow rate of at least 50 I/min, wherein said check valve comprises
- a housing (1) which contains:
- a valve seat (2) comprising the passage (20) and a seat contact surface (R1), wherein said valve seat is made from steel or a ceramic material; and
- a valve member (3) comprising a convexly curved, preferably essentially spherical, member contact surface;
said member contact surface being pretensioned against said seat contact surface for sealing said passage;
said valve member being movable increasing said pretension for opening said passage;
wherein
- said passage has a minimal flow-through area of at least 40 mm²; and
- said seat contact surface has a concave curvature wherein a curvature radius of said concave curvature is larger than a curvature radius of the member contact surface, and
- said valve member is guided linearly within the housing.

7. The apparatus according to claim 6, **characterized in that** said curvature radius of the seat contact surface is at least 105% of the curvature radius of the member contact surface and at most 125% of the curvature radius of the member contact surface.

8. The apparatus according to claim 7, **characterized in that** the seat contact surface comprises a radius (R1) which is at least 105% of a radius of the spherical member contact surface and at most 125% of the radius of the spherical member contact surface.

9. The apparatus according to claim 8, **characterized in that**
- said radius of the seat contact surface is axially outwards offset from a front face (21) of the valve seat along its longitudinal axis (A), preferably by at least 25% and at most 75% of said radius of the seat contact surface; and/or **in that**
- an axial length of said radius of the seat contact surface is at least 7,5% and at most 20% of said radius of the seat contact surface; and/or **in that**
- said radius of the seat contact surface is laterally offset from a longitudinal axis (A) of the valve seat, wherein said lateral offset preferably
- points away from the seat contact surface and/or
- is at least 5% and at most 15% of said radius of the seat contact surface.

10. The apparatus according to one of claims 6 to 9, **characterized in that**
- a transition between the seat contact surface and a front face (21) of the valve seat and/or
- a transition between the seat contact surface and an inner bore of the passage (20)
comprise(s) a radius (R2; R3) which preferably is at most 20% of the radius of the seat contact surface; and/or **in that**
- the valve member comprises a ball (3), wherein preferably a diameter of the ball is at least 140% and at most 180% of a minimal diameter of the passage; and/or **in that**
- the valve member is guided linearly within the housing, preferably by a poppet (4) which preferably comprises at least one inner channel (4A) for fluid from the valve seat passage (20); and/or **in that**
- the valve member is pretensioned by at least one spring, preferably coil spring (5); and/or **in that**
- the housing and/or valve seat are/is made from steel or ceramic; and/or **in that**
- the valve member is sintered and/or made from diamond, ruby, ceramic or steel; and/or **in that**
- the seat contact surface is surface-hardened and/or coated; and/or **in that**
- the valve seat inserted into a cavity within the housing has a stepped outer lateral surface; and/or **in that**
- the curvature radius of the member contact surface is at least 10 mm and at most 20 mm; and/or **in that**
- the valve seat inserted into a cavity within the housing comprises a collar (22), the collar preferably being a radially inner collar and/or protruding towards the valve member; and/or **in that**
- the valve seat inserted into a cavity within the housing is held in place by a gland (6) defining an inlet opening (61) of the check valve, wherein preferably
- said gland extends into the housing and/or presses the valve seat against the housing, preferably in the direction towards the valve member, and/or comprises a, preferably external, thread (6A) engaging with a, preferably internal, thread (1A) of the housing; and/or
- the gland and valve member are located at opposite sides of the valve seat.

11. A method for processing cellulose pulp (P) wherein cellulose pulp periodically flows, in a conveying direction, through a passage (20) of at least one check valve for blocking back flow of fluid through the passage (20), said fluid comprising cellulose, said fluid preferably being pressurized with a peak pressure of at least 500 bar while the check valve is closed and/or said fluid preferably flowing through the open passage with a maximal flow rate of at least 50 I/min, said self-acting check valve blocking back-flow through the passage against said conveying direction and comprising:
- a housing (1) which contains:
- a valve seat (2) comprising the passage (20) and a seat contact surface (R1), wherein said valve seat is made from steel or a ceramic material; and
- a valve member (3) comprising a convexly curved, preferably essentially spherical, member contact surface;
said member contact surface being pretensioned against said seat contact surface for sealing said passage;
said valve member being movable increasing said pretension for opening said passage;
wherein
- said passage has a minimal flow-through area of at least 40 mm²; and
- said seat contact surface has a concave curvature wherein a curvature radius of said concave curvature is larger than a curvature radius of the member contact surface, and
- said valve member is guided linearly within the housing.

12. The method according to claim 11, **characterized in that** said curvature radius of the seat contact surface is at least 105% of the curvature radius of the member contact surface and at most 125% of the curvature radius of the member contact surface.

13. The method according to claim 12, **characterized in that** the seat contact surface comprises a radius (R1) which is at least 105% of a radius of the spherical member contact surface and at most 125% of the radius of the spherical member contact surface.

14. The method according to claim 13, **characterized in that**
- said radius of the seat contact surface is axially outwards offset from a front face (21) of the valve seat along its longitudinal axis (A), preferably by at least 25% and at most 75% of said radius of the seat contact surface; and/or **in that**
- an axial length of said radius of the seat contact surface is at least 7,5% and at most 20% of said radius of the seat contact surface; and/or **in that**
- said radius of the seat contact surface is laterally offset from a longitudinal axis (A) of the valve seat, wherein said lateral offset preferably
- points away from the seat contact surface and/or
- is at least 5% and at most 15% of said radius of the seat contact surface.

15. The method according to one of claims 11 to 14, **characterized in that**
- a transition between the seat contact surface and a front face (21) of the valve seat and/or
- a transition between the seat contact surface and an inner bore of the passage (20)
comprise(s) a radius (R2; R3) which preferably is at most 20% of the radius of the seat contact surface; and/or **in that**
- the valve member comprises a ball (3), wherein preferably a diameter of the ball is at least 140% and at most 180% of a minimal diameter of the passage; and/or **in that**
- the valve member is guided linearly within the housing, preferably by a poppet (4) which preferably comprises at least one inner channel (4A) for fluid from the valve seat passage (20); and/or **in that**
- the valve member is pretensioned by at least one spring, preferably coil spring (5); and/or **in that**
- the housing and/or valve seat are/is made from steel or ceramic; and/or **in that**
- the valve member is sintered and/or made from diamond, ruby, ceramic or steel; and/or **in that**
- the seat contact surface is surface-hardened and/or coated; and/or **in that**
- the valve seat inserted into a cavity within the housing has a stepped outer lateral surface; and/or **in that**
- the curvature radius of the member contact surface is at least 10 mm and at most 20 mm; and/or **in that**
- the valve seat inserted into a cavity within the housing comprises a collar (22), the collar preferably being a radially inner collar and/or protruding towards the valve member; and/or **in that**
- the valve seat inserted into a cavity within the housing is held in place by a gland (6) defining an inlet opening (61) of the check valve, wherein preferably
- said gland extends into the housing and/or presses the valve seat against the housing, preferably in the direction towards the valve member, and/or comprises a, preferably external, thread (6A) engaging with a, preferably internal, thread (1A) of the housing; and/or
- the gland and valve member are located at opposite sides of the valve seat.

## Patentansprüche

1. Verwendung eines Rückschlagventils zum Blockieren eines Rückflusses eines Fluids (P) durch einen Durchgang (20), wobei das Fluid Cellulose aufweist, wobei das Fluid bevorzugt mit einem maximalen Druck von mindestens 500 bar unter Druck gesetzt wird, während das Rückschlagventil geschlossen ist, und/oder das Fluid bevorzugt mit einer maximalen Durchflussrate von mindestens 50 I/min durch den offenen Durchgang fließt,
wobei das Rückschlagventil aufweist:
- ein Gehäuse (1), das enthält:
- einen Ventilsitz (2), der den Durchgang (20) und eine Sitzkontaktfläche (R1) aufweist, wobei der Ventilsitz aus einem Stahl oder einem keramischen Material hergestellt worden ist, und
- ein Ventilelement (3), das eine konvex gekrümmte, bevorzugt im Wesentlichen kugelförmige Elementkontaktfläche aufweist,
wobei die Elementkontaktfläche gegen die Sitzkontaktfläche vorgespannt ist, um den Durchgang abzudichten, und
wobei das Ventilelement beweglich ist, wodurch die Vorspannung zum Öffnen des Durchgangs erhöht wird, wobei
- der Durchgang eine minimale Durchflussfläche von mindestens 40 mm² aufweist, und
- die Sitzkontaktfläche eine konkave Krümmung aufweist, wobei ein Krümmungsradius der konkaven Krümmung größer als ein Krümmungsradius der Elementkontaktfläche ist, und
- das Ventilelement linear innerhalb des Gehäuses geführt wird.

2. Verwendung eines Rückschlagventils nach Anspruch 1, **dadurch gekennzeichnet, dass** der Krümmungsradius der Sitzkontaktfläche mindestens 105 % des Krümmungsradius der Elementkontaktfläche und höchstens 125 % des Krümmungsradius der Elementkontaktfläche beträgt.

3. Verwendung eines Rückschlagventils nach Anspruch 2, **dadurch gekennzeichnet, dass** die Sitzkontaktfläche einen Radius (R1) aufweist, der mindestens 105 % eines Radius der kugelförmigen Kontaktfläche des Elements und höchstens 125 % des Radius der kugelförmigen Kontaktfläche des Elements beträgt.

4. Verwendung eines Rückschlagventils gemäß Anspruch 3, **dadurch gekennzeichnet, dass**
- der Radius der Sitzkontaktfläche von einer Stirnfläche (21) des Ventilsitzes entlang seiner Längsachse (A) axial nach außen bevorzugt um mindestens 25 % und höchstens 75 % des Radius der Sitzkontaktfläche versetzt ist, und/oder dadurch, dass
- eine axiale Länge des Radius der Sitzkontaktfläche mindestens 7,5 % und höchstens 20 % des Radius der Sitzkontaktfläche beträgt, und/oder dadurch, dass
- der Radius der Sitzkontaktfläche seitlich von einer Längsachse (A) des Ventilsitzes versetzt ist,
- wobei der seitliche Versatz bevorzugt
- von der Sitzkontaktfläche weg zeigt und/oder
- mindestens 5 % und höchstens 15 % des Radius der Sitzkontaktfläche beträgt.

5. Verwendung eines Rückschlagventils nach einem der vorstehenden Ansprüche, **dadurch gekennzeichnet, dass**
- ein Übergang zwischen der Sitzkontaktfläche und einer vorderen Fläche (21) des Ventilsitzes und/oder
- ein Übergang zwischen der Sitzkontaktfläche und einer inneren Bohrung des Durchgangs (20)
- einen Radius (R2, R3) aufweist, der bevorzugt höchstens 20 % des Radius der Sitzkontaktfläche beträgt, und/oder dadurch, dass
- das Ventilelement eine Kugel (3) aufweist, wobei bevorzugt ein Durchmesser der Kugel mindestens 140 % und höchstens 180 % eines minimalen Durchmessers des Durchgangs beträgt, und/oder dadurch, dass
- das Ventilelement linear innerhalb des Gehäuses geführt wird, bevorzugt durch einen Ventilteller (4), der bevorzugt mindestens einen inneren Kanal (4A) für das Fluid aus dem Ventilsitzdurchgang (20) aufweist, und/oder dadurch, dass
- das Ventilelement durch mindestens eine Feder, bevorzugt eine Schraubenfeder (5), vorgespannt ist, und/oder dadurch, dass
- das Gehäuse und/oder der Ventilsitz aus einem Stahl oder einer Keramik hergestellt worden sind/ist, und/oder dadurch, dass
- das Ventilelement gesintert und/oder aus einem Diamanten, einem Rubin, einer Keramik oder einem Stahl hergestellt worden ist, und/oder dadurch, dass
- die Sitzkontaktfläche oberflächengehärtet und/oder beschichtet worden ist, und/oder dadurch, dass
- der Ventilsitz, der in einen Hohlraum innerhalb des Gehäuses eingesetzt ist, eine abgestufte äußere seitliche Oberfläche aufweist, und/oder dadurch, dass
- der Krümmungsradius der Kontaktfläche des Elements mindestens 10 mm und höchstens 20 mm beträgt, und/oder dadurch, dass
- der Ventilsitz, der in einen Hohlraum innerhalb des Gehäuses eingesetzt ist, einen Kragen (22) aufweist, wobei der Kragen bevorzugt ein radial innerer Kragen ist und/oder in Richtung auf das Ventilelement vorsteht, und/oder dadurch, dass
- der Ventilsitz, der in einen Hohlraum innerhalb des Gehäuses eingesetzt ist, durch eine Stopfbuchse (6) an Ort und Stelle gehalten wird, die eine Einlassöffnung (61) des Rückschlagventils bestimmt, wobei bevorzugt:
- die Stopfbuchse sich in das Gehäuse erstreckt und/oder den Ventilsitz gegen das Gehäuse drückt, bevorzugt in Richtung auf das Ventilelement, und/oder ein bevorzugt äußeres Gewinde (6A) aufweist, das mit einem bevorzugt inneren Gewinde (1A) des Gehäuses in Eingriff steht, und/oder
- die Stopfbuchse und das Ventilelement an gegenüberliegenden Seiten des Ventilsitzes angeordnet sind.

6. Vorrichtung zur Verarbeitung von Zellulosepulpe (P), welche eine Pulpezufuhrleitung (L) mit mindestens einem Rückschlagventil zum Blockieren des Rückflusses des Fluids durch einen Durchgang (20) aufweist, wobei das Fluid Zellulose aufweist, wobei das Fluid bevorzugt mit einem Spitzendruck von mindestens 500 bar unter Druck gesetzt wird, während das Rückschlagventil geschlossen ist, und/oder wobei das Fluid bevorzugt durch den offenen Durchgang mit einer maximalen Durchflussrate von mindestens 50 I/min fließt, wobei das Rückschlagventil aufweist
- ein Gehäuse (1), das enthält:
- einen Ventilsitz (2), der den Durchgang (20) und eine Sitzkontaktfläche (R1) aufweist, wobei der Ventilsitz aus einem Stahl oder einem keramischen Material hergestellt worden ist, und
- ein Ventilelement (3), das eine konvex gekrümmte, bevorzugt im Wesentlichen kugelförmige Elementkontaktfläche aufweist,
wobei die Elementkontaktfläche gegen die Sitzkontaktfläche vorgespannt ist, um den Durchgang abzudichten,
wobei das Ventilelement beweglich ist, wodurch die Vorspannung zum Öffnen des Durchgangs erhöht wird, wobei
- der Durchgang eine minimale Durchflussfläche von mindestens 40 mm² aufweist, und
- die Sitzkontaktfläche eine konkave Krümmung aufweist, wobei ein Krümmungsradius der konkaven Krümmung größer als ein Krümmungsradius der Elementkontaktfläche ist, und
- das Ventilelement linear innerhalb des Gehäuses geführt wird.

7. Vorrichtung nach Anspruch 6, **dadurch gekennzeichnet, dass** der Krümmungsradius der Sitzkontaktfläche mindestens 105 % des Krümmungsradius der Elementkontaktfläche und höchstens 125 % des Krümmungsradius der Elementkontaktfläche beträgt.

8. Vorrichtung nach Anspruch 7, **dadurch gekennzeichnet, dass** die Sitzkontaktfläche einen Radius (R1) aufweist, der mindestens 105 % eines Radius der kugelförmigen Elementkontaktfläche und höchstens 125 % des Radius der kugelförmigen Elementkontaktfläche beträgt.

9. Vorrichtung nach Anspruch 8, **dadurch gekennzeichnet, dass**
- der Radius der Sitzkontaktfläche von einer vorderen Fläche (21) des Ventilsitzes entlang seiner Längsachse (A) axial nach außen versetzt ist, bevorzugt um mindestens 25 % und höchstens 75 % des Radius der Sitzkontaktfläche, und/oder dadurch, dass
- eine axiale Länge des Radius der Sitzkontaktfläche mindestens 7,5 % und höchstens 20 % des Radius der Sitzkontaktfläche beträgt, und/oder dadurch, dass
- der Radius der Sitzkontaktfläche seitlich von einer Längsachse (A) des Ventilsitzes versetzt ist, wobei der seitliche Versatz bevorzugt
- von der Sitzkontaktfläche weg zeigt und/oder
- mindestens 5 % und höchstens 15 % des Radius der Sitzkontaktfläche beträgt.

10. Vorrichtung nach einem der Ansprüche 6 bis 9, **dadurch gekennzeichnet, dass**
- ein Übergang zwischen der Sitzkontaktfläche und einer Stirnfläche (21) des Ventilsitzes und/oder
- ein Übergang zwischen der Sitzkontaktfläche und einer Innenbohrung des Durchgangs (20)
- einen Radius (R2, R3) aufweist, der bevorzugt höchstens 20 % des Radius der Sitzkontaktfläche beträgt, und/oder dadurch, dass
- das Ventilelement eine Kugel (3) aufweist, wobei bevorzugt ein Durchmesser der Kugel mindestens 140 % und höchstens 180 % eines minimalen Durchmessers des Durchgangs beträgt, und/oder dadurch, dass
- das Ventilelement innerhalb des Gehäuses linear geführt wird, bevorzugt durch einen Ventilteller (4), der bevorzugt mindestens einen inneren Kanal (4A) für Fluid aus dem Ventilsitzdurchgang (20) aufweist, und/oder dadurch, dass
- das Ventilelement durch mindestens eine Feder, bevorzugt eine Schraubenfeder (5), vorgespannt ist, und/oder dadurch, dass
- das Gehäuse und/oder der Ventilsitz aus einem Stahl oder einer Keramik hergestellt worden sind/ist, und/oder dadurch, dass
- das Ventilelement gesintert und/oder aus einem Diamanten, einem Rubin, einer Keramik oder einem Stahl hergestellt worden ist, und/oder dadurch, dass
- die Sitzkontaktfläche oberflächengehärtet und/oder beschichtet worden ist, und/oder dadurch, dass
- der Ventilsitz, der in einen Hohlraum innerhalb des Gehäuses eingesetzt ist, eine abgestufte äußere seitliche Oberfläche aufweist, und/oder dadurch, dass
- der Krümmungsradius der Kontaktfläche des Elements mindestens 10 mm und höchstens 20 mm beträgt, und/oder dadurch, dass
- der Ventilsitz, der in einen Hohlraum innerhalb des Gehäuses eingesetzt ist, einen Kragen (22) aufweist, wobei der Kragen bevorzugt ein radial innerer Kragen ist und/oder in Richtung auf das Ventilelement vorsteht, und/oder dadurch, dass
- der Ventilsitz, der in einen Hohlraum innerhalb des Gehäuses eingesetzt ist, durch eine Stopfbuchse (6) an Ort und Stelle gehalten wird, die eine Einlassöffnung (61) des Rückschlagventils bestimmt, wobei bevorzugt
- die Stopfbuchse sich in das Gehäuse erstreckt und/oder den Ventilsitz gegen das Gehäuse drückt, bevorzugt in Richtung auf das Ventilelement, und/oder ein bevorzugt äußeres Gewinde (6A) aufweist, das mit einem bevorzugt inneren Gewinde (1A) des Gehäuses in Eingriff steht, und/oder
- die Stopfbuchse und das Ventilelement an gegenüberliegenden Seiten des Ventilsitzes angeordnet sind.

11. Verfahren zur Verarbeitung von Zellulosepulpe (P), wobei die Zellulosepulpe periodisch in einer Förderrichtung durch einen Durchlass (20) von mindestens einem Rückschlagventil fließt, um den Rückfluss des Fluids durch den Durchlass (20) zu blockieren, wobei das Fluid Zellulose aufweist, wobei das Fluid bevorzugt mit einem Spitzendruck von mindestens 500 bar unter Druck gesetzt wird, während das Rückschlagventil geschlossen ist, und/oder das Fluid bevorzugt mit einer maximalen Durchflussrate von mindestens 50 I/min durch den offenen Durchgang fließt, wobei das selbsttätige Rückschlagventil den Rückfluss durch den Durchgang entgegen der Förderrichtung blockiert und aufweist:
- ein Gehäuse (1), das enthält:
- einen Ventilsitz (2), der den Durchgang (20) und eine Sitzkontaktfläche (R1) aufweist, wobei der Ventilsitz aus einem Stahl oder einem keramischen Material hergestellt worden ist, und
- ein Ventilelement (3), das eine konvex gekrümmte, bevorzugt im Wesentlichen kugelförmige Elementkontaktfläche aufweist,
wobei die Kontaktfläche des Elements gegen die Kontaktfläche des Sitzes vorgespannt ist, um den Durchgang abzudichten,
wobei das Ventilelement beweglich ist, wodurch die Vorspannung zum Öffnen des Durchgangs erhöht wird,, wobei
- der Durchgang eine minimale Durchflussfläche von mindestens 40 mm² aufweist, und
- die Kontaktfläche des Sitzes eine konkave Krümmung aufweist, wobei ein Krümmungsradius der konkaven Krümmung größer als ein Krümmungsradius der Kontaktfläche des Elements ist, und
- das Ventilelement linear innerhalb des Gehäuses geführt wird.

12. Verfahren nach Anspruch 11, **dadurch gekennzeichnet, dass** der Krümmungsradius der Sitzkontaktfläche mindestens 105 % des Krümmungsradius der Elementkontaktfläche und höchstens 125 % des Krümmungsradius der Elementkontaktfläche beträgt.

13. Verfahren nach Anspruch 12, **dadurch gekennzeichnet, dass** die Sitzkontaktfläche einen Radius (R1) aufweist, der mindestens 105 % eines Radius der kugelförmigen Elementkontaktfläche und höchstens 125 % des Radius der kugelförmigen Elementkontaktfläche beträgt.

14. Verfahren nach Anspruch 13, **dadurch gekennzeichnet, dass**
- der Radius der Sitzkontaktfläche von einer Stirnfläche (21) des Ventilsitzes entlang seiner Längsachse (A) axial nach außen versetzt ist, bevorzugt um mindestens 25 % und höchstens 75 % des Radius der Sitzkontaktfläche, und/oder dadurch, dass
- eine axiale Länge des Radius der Sitzkontaktfläche mindestens 7,5 % und höchstens 20 % des Radius der Sitzkontaktfläche beträgt, und/oder dadurch, dass
- der Radius der Sitzkontaktfläche seitlich von einer Längsachse (A) des Ventilsitzes versetzt ist, wobei der seitliche Versatz bevorzugt
- von der Sitzkontaktfläche weg zeigt und/oder
- mindestens 5 % und höchstens 15 % des Radius der Sitzkontaktfläche beträgt.

15. Verfahren nach einem der Ansprüche 11 bis 14, **dadurch gekennzeichnet, dass**
- ein Übergang zwischen der Sitzkontaktfläche und einer vorderen Fläche (21) des Ventilsitzes und/oder
- ein Übergang zwischen der Sitzkontaktfläche und einer inneren Bohrung des Durchgangs (20)
- einen Radius (R2, R3) aufweist, der bevorzugt höchstens 20 % des Radius der Sitzkontaktfläche beträgt, und/oder dadurch, dass
- das Ventilelement eine Kugel (3) aufweist, wobei bevorzugt ein Durchmesser der Kugel mindestens 140 % und höchstens 180 % eines minimalen Durchmessers des Durchgangs beträgt, und/oder dadurch, dass
- das Ventilelement linear innerhalb des Gehäuses geführt wird, bevorzugt durch einen Ventilteller (4), der bevorzugt mindestens einen inneren Kanal (4A) für das Fluid von dem Ventilsitzdurchgang (20) aufweist, und/oder dadurch, dass
- das Ventilelement durch mindestens eine Feder, bevorzugt eine Schraubenfeder (5), vorgespannt ist, und/oder
- das Gehäuse und/oder der Ventilsitz aus einem Stahl oder einer Keramik hergestellt worden sind/ist, und/oder
- das Ventilelement gesintert und/oder aus einem Diamanten, einem Rubin, einer Keramik oder einem Stahl hergestellt worden ist, und/oder
- die Sitzkontaktfläche oberflächengehärtet und/oder beschichtet worden ist, und/oder
- der in einen Hohlraum innerhalb des Gehäuses eingesetzte Ventilsitz eine abgestufte äußere seitliche Oberfläche aufweist, und/oder
- der Krümmungsradius der Kontaktfläche des Elements mindestens 10 mm und höchstens 20 mm beträgt, und/oder
- der in einen Hohlraum innerhalb des Gehäuses eingesetzte Ventilsitz einen Kragen (22) aufweist, wobei der Kragen bevorzugt ein radial innerer Kragen ist und/oder in Richtung auf das Ventilelement vorsteht, und/oder
- der in einen Hohlraum innerhalb des Gehäuses eingesetzte Ventilsitz durch eine Stopfbuchse (6) an Ort und Stelle gehalten wird, die eine Einlassöffnung (61) des Rückschlagventils bestimmt, wobei bevorzugt:
- die Stopfbuchse sich in das Gehäuse erstreckt und/oder den Ventilsitz gegen das Gehäuse drückt, bevorzugt in Richtung auf das Ventilelement, und/oder ein bevorzugt äußeres Gewinde (6A) aufweist, das mit einem bevorzugt inneren Gewinde (1A) des Gehäuses in Eingriff steht, und/oder
- die Stopfbuchse und das Ventilelement an gegenüberliegenden Seiten des Ventilsitzes angeordnet sind.

## Revendications

1. Utilisation d'un clapet antiretour pour bloquer un reflux de fluide (P) à travers un passage (20), dans laquelle ledit fluide comprend de la cellulose, ledit fluide étant préférentiellement mis sous pression avec une pression maximale d'au moins 500 bars tandis que le clapet antiretour est fermé et/ou ledit fluide s'écoulant préférentiellement à travers le passage ouvert avec un débit maximal d'au moins 50 L/min ;
dans laquelle ledit clapet antiretour comprend
- un logement (1) qui contient :
- un siège de clapet (2) comprenant le passage (20) et une surface de contact de siège (R1), dans laquelle ledit siège de clapet est en acier ou en matériau céramique ; et
- un élément de clapet (3) comprenant une surface de contact d'élément à courbure convexe, préférentiellement sensiblement sphérique ;
ladite surface de contact d'élément étant précontrainte contre ladite surface de contact de siège pour assurer l'étanchéité dudit passage ;
ledit élément de clapet étant mobile en augmentant ladite précontrainte pour ouvrir ledit passage ;
dans laquelle
- ledit passage a une surface d'écoulement minimale d'au moins 40 mm² ; et
- ladite surface de contact de siège a une courbure concave où un rayon de courbure de ladite courbure concave est supérieur à un rayon de courbure de la surface de contact d'élément, et
- ledit élément de clapet est guidé linéairement à l'intérieur du logement.

2. Utilisation d'un clapet antiretour selon la revendication 1, **caractérisée en ce que** ledit rayon de courbure de la surface de contact de siège est d'au moins 105 % du rayon de courbure de la surface de contact d'élément et d'au plus 125 % du rayon de courbure de la surface de contact d'élément.

3. Utilisation d'un clapet antiretour selon la revendication 2, **caractérisée en ce que** la surface de contact de siège comprend un rayon (R1) qui est d'au moins 105 % d'un rayon de la surface de contact d'élément sphérique et d'au plus 125 % du rayon de la surface de contact d'élément sphérique.

4. Utilisation d'un clapet antiretour selon la revendication 3, **caractérisée en ce que**
- ledit rayon de la surface de contact de siège est décalé axialement vers l'extérieur par rapport à une face avant (21) du siège de clapet le long de son axe longitudinal (A), préférentiellement d'au moins 25 % et d'au plus 75 % dudit rayon de la surface de contact de siège ; et/ou **en ce que**
- une longueur axiale dudit rayon de la surface de contact de siège est d'au moins 7,5 % et d'au plus 20 % dudit rayon de la surface de contact de siège ; et/ou **en ce que**
- ledit rayon de la surface de contact de siège est décalé latéralement par rapport à un axe longitudinal (A) du siège de clapet ;
- dans laquelle ledit décalage latéral, préférentiellement,
- est orienté à l'opposé de la surface de contact de siège et/ou
- est d'au moins 5 % et d'au plus 15 % dudit rayon de la surface de contact de siège.

5. Utilisation d'un clapet antiretour selon l'une des revendications précédentes, **caractérisée en ce que**
- une transition entre la surface de contact de siège et une face avant (21) du siège de clapet et/ou
- une transition entre la surface de contact de siège et un alésage interne du passage (20)
- comprend (comprennent) un rayon (R2 ; R3) qui est préférentiellement d'au plus 20 % du rayon de la surface de contact de siège ; et/ou **en ce que**
- l'élément de clapet comprend une bille (3), dans laquelle préférentiellement un diamètre de la bille est d'au moins 140 % et d'au plus 180 % d'un diamètre minimal du passage ; et/ou **en ce que**
- l'élément de clapet est guidé linéairement à l'intérieur du logement, préférentiellement par un champignon (4) qui comprend préférentiellement au moins un canal interne (4A) pour le fluide provenant du passage de siège de clapet (20) ; et/ou **en ce que**
- l'élément de clapet est précontraint par au moins un ressort, préférentiellement un ressort hélicoïdal (5) ; et/ou **en ce que**
- le logement et/ou le siège de clapet sont fabriqués à partir d'acier ou de céramique ; et/ou **en ce que**
- l'élément de clapet est fritté et/ou fabriqué à partir de diamant, de rubis, de céramique ou d'acier; et/ou **en ce que**
- la surface de contact de siège est durcie en surface et/ou revêtue ; et/ou **en ce que**
- le siège de clapet inséré dans une cavité à l'intérieur du logement a une surface latérale externe étagée ; et/ou **en ce que**
- le rayon de courbure de la surface de contact d'élément est d'au moins 10 mm et d'au plus 20 mm ; et/ou **en ce que**
- le siège de clapet inséré dans une cavité à l'intérieur du logement comprend un collier (22), le collier étant préférentiellement un collier radialement interne et/ou faisant saillie vers l'élément de clapet ; et/ou **en ce que**
- le siège de clapet inséré dans une cavité à l'intérieur du logement est maintenu en place par un presse-étoupe (6) définissant une ouverture d'entrée (61) du clapet de non-retour, dans laquelle préférentiellement
- ledit presse-étoupe s'étend dans le logement et/ou presse le siège de clapet contre le logement, préférentiellement en direction de l'élément de clapet, et/ou comprend un filetage (6A), préférentiellement externe, venant en prise avec un filetage (1A), préférentiellement interne, du logement ; et/ou
- le presse-étoupe et l'élément de clapet sont situés sur des côtés opposés du siège de clapet.

6. Appareil pour le traitement de pâte de cellulose (P), comprenant une ligne d'alimentation en pâte (L) avec au moins un clapet antiretour pour bloquer un reflux de fluide à travers un passage (20), ledit fluide comprenant de la cellulose, ledit fluide étant préférentiellement mis sous pression avec un pic de pression d'au moins 500 bars tandis que le clapet antiretour est fermé et/ou ledit fluide s'écoulant préférentiellement à travers le passage ouvert avec un débit maximal d'au moins 50 L/min, dans lequel ledit clapet antiretour comprend
- un logement (1) qui contient :
- un siège de clapet (2) comprenant le passage (20) et une surface de contact de siège (R1), dans lequel ledit siège de clapet est en acier ou en matériau céramique ; et
- un élément de clapet (3) comprenant une surface de contact d'élément à courbure convexe, préférentiellement sensiblement sphérique ;
ladite surface de contact d'élément étant précontrainte contre ladite surface de contact de siège pour assurer l'étanchéité dudit passage ;
ledit élément de clapet étant mobile en augmentant ladite précontrainte pour ouvrir ledit passage ;
dans lequel
- ledit passage a une surface d'écoulement minimale d'au moins 40 mm² ; et
- ladite surface de contact de siège a une courbure concave où un rayon de courbure de ladite courbure concave est supérieur à un rayon de courbure de la surface de contact d'élément, et
- ledit élément de clapet est guidé linéairement à l'intérieur du logement.

7. Appareil selon la revendication 6, **caractérisé en ce que** ledit rayon de courbure de la surface de contact de siège est d'au moins 105 % du rayon de courbure de la surface de contact d'élément et d'au plus 125 % du rayon de courbure de la surface de contact d'élément.

8. Appareil selon la revendication 7, **caractérisé en ce que** la surface de contact de siège comprend un rayon (R1) qui est d'au moins 105 % d'un rayon de la surface de contact d'élément sphérique et d'au plus 125 % du rayon de la surface de contact d'élément sphérique.

9. Appareil selon la revendication 8, **caractérisé en ce que**
- ledit rayon de la surface de contact de siège est décalé axialement vers l'extérieur par rapport à une face avant (21) du siège de clapet le long de son axe longitudinal (A), préférentiellement d'au moins 25 % et d'au plus 75 % dudit rayon de la surface de contact de siège ; et/ou **en ce que**
- une longueur axiale dudit rayon de la surface de contact de siège est d'au moins 7,5 % et d'au plus 20 % dudit rayon de la surface de contact de siège ; et/ou **en ce que**
- ledit rayon de la surface de contact de siège est décalé latéralement par rapport à un axe longitudinal (A) du siège de clapet, dans lequel ledit décalage latéral, préférentiellement,
- est orienté à l'opposé de la surface de contact de siège et/ou
- est d'au moins 5 % et d'au plus 15 % dudit rayon de la surface de contact de siège.

10. Appareil selon l'une des revendications 6 à 9, **caractérisé en ce que**
- une transition entre la surface de contact de siège et une face avant (21) du siège de clapet et/ou
- une transition entre la surface de contact de siège et un alésage interne du passage (20)
comprend (comprennent) un rayon (R2 ; R3) qui est préférentiellement d'au plus 20 % du rayon de la surface de contact de siège ; et/ou **en ce que**
- l'élément de clapet comprend une bille (3), dans lequel préférentiellement un diamètre de la bille est d'au moins 140 % et d'au plus 180 % d'un diamètre minimal du passage ; et/ou **en ce que**
- l'élément de clapet est guidé linéairement à l'intérieur du logement, préférentiellement par un champignon (4) qui comprend préférentiellement au moins un canal interne (4A) pour le fluide provenant du passage de siège de clapet (20) ; et/ou **en ce que**
- l'élément de clapet est précontraint par au moins un ressort, préférentiellement un ressort hélicoïdal (5) ; et/ou **en ce que**
- le logement et/ou le siège de clapet sont fabriqués à partir d'acier ou de céramique ; et/ou **en ce que**
- l'élément de clapet est fritté et/ou fabriqué à partir de diamant, de rubis, de céramique ou d'acier; et/ou **en ce que**
- la surface de contact de siège est durcie en surface et/ou revêtue ; et/ou **en ce que**
- le siège de clapet inséré dans une cavité à l'intérieur du logement a une surface latérale externe étagée ; et/ou **en ce que**
- le rayon de courbure de la surface de contact d'élément est d'au moins 10 mm et d'au plus 20 mm ; et/ou **en ce que**
- le siège de clapet inséré dans une cavité à l'intérieur du logement comprend un collier (22), le collier étant préférentiellement un collier radialement interne et/ou faisant saillie vers l'élément de clapet; et/ou **en ce que**
- le siège de clapet inséré dans une cavité à l'intérieur du logement est maintenu en place par un presse-étoupe (6) définissant une ouverture d'entrée (61) du clapet de non-retour, dans lequel préférentiellement
- ledit presse-étoupe s'étend dans le logement et/ou presse le siège de clapet contre le logement, préférentiellement en direction de l'élément de clapet, et/ou comprend un filetage (6A), préférentiellement externe, venant en prise avec un filetage (1A), préférentiellement interne, du logement ; et/ou
- le presse-étoupe et l'élément de clapet sont situés sur des côtés opposés du siège de clapet.

11. Procédé pour le traitement de pâte de cellulose (P) dans lequel de la pâte de cellulose s'écoule périodiquement dans une direction d'acheminement, à travers un passage (20) d'au au moins un clapet antiretour pour bloquer un reflux de fluide à travers le passage (20), ledit fluide comprenant de la cellulose, ledit fluide étant préférentiellement mis sous pression avec un pic de pression d'au moins 500 bars tandis que le clapet antiretour est fermé et/ou ledit fluide s'écoulant préférentiellement à travers le passage ouvert avec un débit maximal d'au moins 50 L/min, ledit clapet antiretour automatique bloquant un reflux à travers le passage à l'opposé de la direction d'acheminement et comprenant :
- un logement (1) qui contient :
- un siège de clapet (2) comprenant le passage (20) et une surface de contact de siège (R1), dans lequel ledit siège de clapet est en acier ou en matériau céramique ; et
- un élément de clapet (3) comprenant une surface de contact d'élément à courbure convexe, préférentiellement sensiblement sphérique ;
ladite surface de contact d'élément étant précontrainte contre ladite surface de contact de siège pour assurer l'étanchéité dudit passage ;
ledit élément de clapet étant mobile en augmentant ladite précontrainte pour ouvrir ledit passage ;
dans lequel
- ledit passage a une surface d'écoulement minimale d'au moins 40 mm² ; et
- ladite surface de contact de siège a une courbure concave où un rayon de courbure de ladite courbure concave est supérieur à un rayon de courbure de la surface de contact d'élément, et
- ledit élément de clapet est guidé linéairement à l'intérieur du logement.

12. Procédé selon la revendication 11, **caractérisé en ce que** ledit rayon de courbure de la surface de contact de siège est d'au moins 105 % du rayon de courbure de la surface de contact d'élément et d'au plus 125 % du rayon de courbure de la surface de contact d'élément.

13. Procédé selon la revendication 12, **caractérisé en ce que** la surface de contact de siège comprend un rayon (R1) qui est d'au moins 105 % d'un rayon de la surface de contact d'élément sphérique et d'au plus 125 % du rayon de la surface de contact d'élément sphérique.

14. Procédé selon la revendication 13, **caractérisé en ce que**
- ledit rayon de la surface de contact de siège est décalé axialement vers l'extérieur par rapport à une face avant (21) du siège de clapet le long de son axe longitudinal (A), préférentiellement d'au moins 25 % et d'au plus 75 % dudit rayon de la surface de contact de siège ; et/ou **en ce que**
- une longueur axiale dudit rayon de la surface de contact de siège est d'au moins 7,5 % et d'au plus 20 % dudit rayon de la surface de contact de siège ; et/ou **en ce que**
- ledit rayon de la surface de contact de siège est décalé latéralement par rapport à un axe longitudinal (A) du siège de clapet, dans lequel ledit décalage latéral, préférentiellement,
- est orienté à l'opposé de la surface de contact de siège et/ou
- est d'au moins 5 % et d'au plus 15 % dudit rayon de la surface de contact de siège.

15. Procédé selon l'une des revendications 11 à 14, **caractérisé en ce que**
- une transition entre la surface de contact de siège et une face avant (21) du siège de clapet et/ou
- une transition entre la surface de contact de siège et un alésage interne du passage (20)
comprend (comprennent) un rayon (R2 ; R3) qui est préférentiellement d'au plus 20 % du rayon de la surface de contact de siège ; et/ou **en ce que**
- l'élément de clapet comprend une bille (3), dans lequel préférentiellement un diamètre de la bille est d'au moins 140 % et d'au plus 180 % d'un diamètre minimal du passage ; et/ou **en ce que**
- l'élément de clapet est guidé linéairement à l'intérieur du logement, préférentiellement par un champignon (4) qui comprend préférentiellement au moins un canal interne (4A) pour le fluide provenant du passage de siège de clapet (20) ; et/ou **en ce que**
- l'élément de clapet est précontraint par au moins un ressort, préférentiellement un ressort hélicoïdal (5) ; et/ou **en ce que**
- le logement et/ou le siège de clapet sont fabriqués à partir d'acier ou de céramique ; et/ou **en ce que**
- l'élément de clapet est fritté et/ou fabriqué à partir de diamant, de rubis, de céramique ou d'acier; et/ou **en ce que**
- la surface de contact de siège est durcie en surface et/ou revêtue ; et/ou **en ce que**
- le siège de clapet inséré dans une cavité à l'intérieur du logement a une surface latérale externe étagée ; et/ou **en ce que**
- le rayon de courbure de la surface de contact d'élément est d'au moins 10 mm et d'au plus 20 mm ; et/ou **en ce que**
- le siège de clapet inséré dans une cavité à l'intérieur du logement comprend un collier (22), le collier étant préférentiellement un collier radialement interne et/ou faisant saillie vers l'élément de clapet; et/ou **en ce que**
- le siège de clapet inséré dans une cavité à l'intérieur du logement est maintenu en place par un presse-étoupe (6) définissant une ouverture d'entrée (61) du clapet de non-retour, dans lequel préférentiellement
- ledit presse-étoupe s'étend dans le logement et/ou presse le siège de clapet contre le logement, préférentiellement en direction de l'élément de clapet, et/ou comprend un filetage (6A), préférentiellement externe, venant en prise avec un filetage (1A), préférentiellement interne, du logement ; et/ou
- le presse-étoupe et l'élément de clapet sont situés sur des côtés opposés du siège de clapet.
